(19) Europäisches Patentamt
European Patent Office
Office européen des brevets

(11) Numéro de publication : **0 343 029 B1**

# (12) FASCICULE DE BREVET EUROPEEN

(45) Date de publication du fascicule du brevet : **01.04.92 Bulletin 92/14**

(51) Int. Cl.$^5$ : **C08F 20/36,** C09K 19/38

(21) Numéro de dépôt : **89401166.7**

(22) Date de dépôt : **25.04.89**

## (54) Polymères mésomorphes à chaînes latérales comportant un motif trans (cyano-4 phényl)-2 dioxanne 1,3 YL-5.

(30) Priorité : **06.05.88 FR 8806119**

(43) Date de publication de la demande : **23.11.89 Bulletin 89/47**

(45) Mention de la délivrance du brevet : **01.04.92 Bulletin 92/14**

(84) Etats contractants désignés : **CH DE FR LI**

(56) Documents cités :
**GB-A- 2 002 767**
**DIE MAKROMOLEKULARE CHEMIE, vol. 188, 1987, pages 1017-1031, Bâle, CH; C.S. HSU et al.: "Liquid crystalline polymers containing heterocycloalkanediyl groups as mesogens, 1 Liquid crystalline polymethacrylates and polyacrylates containing 1,3-dioxane-2,5-diyl groups as mesogens in the side chain"**
**CHEMICAL ABSTRACTS, vol. 105, no. 26, 29 décembre 1986, page 6, no. 227428f, Columbus, Ohio, US; C.S. HSU et al.: "Side-chain liquid-crystalline polymethacrylates and polycrylates containing 2,5-disubstituted-1,3-dioxane mesogens",**

(73) Titulaire : **THOMSON RECHERCHE**
**173, bld Haussmann**
**F-75008 Paris (FR)**

(72) Inventeur : **Le Barny, Pierre**
**THOMSON-CSF SCPI Cédex 67**
**F-92045 Paris la Défence (FR)**
Inventeur : **Friedrich, Claude**
**THOMSON-CSF SCPI Cédex 67**
**F-92045 Paris la Défence (FR)**
Inventeur : **Lacoudre, Nelly**
**THOMSON-CSF SCPI Cédex 67**
**F-92045 Paris la Défence (FR)**
Inventeur : **Legrand, Cécile**
**THOMSON-CSF SCPI Cédex 67**
**F-92045 Paris la Défence (FR)**

(74) Mandataire : **Guérin, Michel et al**
**THOMSON-CSF SCPI**
**F-92045 PARIS LA DEFENSE CEDEX 67 (FR)**

EP 0 343 029 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne une nouvelle famille de polymères cristaux liquides à température de transition vitreuse élevée (supérieure à 45°C) pouvant présenter une phase nématique et/ou une phase smectique. Ces nouveaux polymères sont utilisables en optique non linéaire sous forme de couche dopée dans des systèmes dits "guest-host" à orientation gelée thermiquement.

A cause de leur facilité de mise en oeuvre, les films de polymère dopés avec des molécules ayant une forte hyperpolarisabilité β (système guest-host) puis polarisés au moyen d'un champ électrique continu, présentent un grand intérêt en optique non linéaire et plus particulièrement dans les effets du second ordre. Deux types de polymères peuvent être utilisés comme host dans les systèmes guest-host : les polymères amorphes comme le polyméthacrylate de méthyle (PMMA) et les polymères cristaux liquides à chaînes latérales. Des travaux récents ont démontré que la valeur du plus grand coefficient ($d_{33}$) du tenseur de susceptibilité d'ordre 2 ($\chi^{(2)}$) est plus élevée lorsqu'on utilise un polymère cristal liquide dans les systèmes guest-host. Ce coefficient $d_{33}$ peut alors être multiplié par un facteur compris entre 1 et 5 (voir K.D. SINGER, M.G. KUZYK, J.E. SOHN, JOURNAL OF THE OPTICAL SOCIETY OF AMERICA, B. VOL. 4, N° 6, 1987).

Cependant, les systèmes de type "guest-host" formés avec des polymères cristaux liquides à chaînes latérales sont le siège après polarisation, de phénomènes de relaxation qui ont pour effet de diminuer la polarisation du matériau, ce qui a pour conséquence de provoquer une perte d'efficacité dans la conversion de l'onde de pulsation ω en onde de pulsation 2ω. Le phénomène de relaxation observé est principalement dû au fait que les polymères mésomorphes à chaînes latérales ont une température de transition vitreuse basse (proche de la température ambiante).

Dans le domaine des petites molécules de cristaux liquides, plusieurs équipes de chercheurs ont obtenu des molécules ayant des propriétés intéressantes en remplaçant des groupes aromatiques par des groupes hétérocyclaniques. Plus particulièrement, le remplacement d'un noyau benzénique contenu dans une structure biphényle ou terphényle par un radical trans 1,3 dioxanne conduit à des matériaux ayant une faible valeur du rapport $K_{33}/K_{11}$, ce qui augmente la raideur de la courbe contraste-tension des afficheurs "nématique en hélice" et conduit à des taux de multiplexage plus grands ($K_{33}$ et $K_{11}$ étant les constantes élastiques liées aux déformations respectivement en flexion et en éventail).

A ce jour, un nombre limité de polymères cristaux liquides comportant le motif 1,3 dioxanne dans leurs chaînes latérales ont été synthétisés. Ce sont essentiellement des polyacrylates, des polyméthacrylates et des polysiloxannes formés à partir du groupement mésogène trans (méthoxy-4 phényl)-5 phényl-2 dioxanne 1,3 (C.S. HSU, J.M. RODRIGUEZ-PARADA, V. PERCEC, MAKROMOLECULAR CHEMIE, 188, p. 1017-1031, 1987) ou des polysiloxannes formés à partir des groupements mésogènes suivants : trans (méthoxy-4 phényl)-2 dioxanne 1,3 et trans (méthoxy-4 phényl)-5 dioxanne 1,3 (C.S. HSU, V. PERCEC, POLYMER BULLETIN 17, p. 49-54, 1987). Ces composés sont caractérisés par une faible amisotropie diélectrique.

Quelques polymères cristaux liquides ayant une amisotropie diélectrique positive importante ont été synthétisés. Ce sont des polysiloxannes portant le groupement mésogène trans (cyano-4 phényl) -2 dioxanne 1,3 yl-5 (C.S. HSU, V. PERCEC, MAKROMOLECULAR CHEMIE, RAPID COMMUNICATION 8, p. 331-337, 1987). Ces polymères sont caractérisés par une température de transition vitreuse très basse (inférieure à -100°C) ce qui les rend inutilisables en optique non linéaire.

Afin de pallier ces inconvénients, l'invention propose une famille d'homopolymères pouvant présenter une phase nématique et/ou une phase smectique A, ayant une anisotropie diélectrique positive et une température de transition vitreuse supérieure à la température ambiante.

Ces homopolymères sont du type polycrylate, dérivés du trans (cyano-4 phényl)-2 hydroxy-5 dioxanne 1,3.

L'invention a donc pour objet un polymère mésomorphe à chaînes latérales, le polymère étant du type polyacrylate et les chaînes latérales comportant le motif 1,3 dioxanne, caractérisé en ce qu'il répond à la formule suivante :

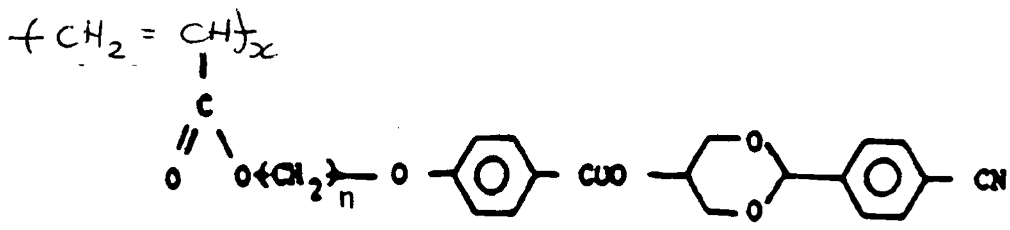

x indiquant le degré de polymérisation

et 2 ≦ n ≦ 15.

L'invention a aussi pour objet un procédé de fabrication du polymère mésomorphe caractérisé en ce qu'il comprend les étapes suivantes :

- 1ère étape : synthèse du (cyano-4 phényl)-2 hydroxy-5 dioxanne 1,3 par action du glycérol sur le cyano-4 benzaldéhyde,
- 2ème étape : obtention de l' ω-bromoalcanol par réduction de l'acide ω-bromoalcanoïque correspondant,
- 3ème étape : synthèse de l'acide-hydroxy-alkyloxy-4 benzoïque par action de l' ω-bromoalcanol obtenu à l'issue de la 2ème étape sur l'acide hydroxy-4 benzoïque,
- 4ème étape : obtention de l'acide (acryloyloxyalkyloxy)-4 benzoïque par estérification de l'acide obtenu à l'issue de la 3ème étape au moyen de l'acide acrylique,
- 5ème étape : synthèse du monomère (cyano-4 phényl)-2 (acryloyloxyalkyloxy)-4 (benzoyloxy) 5 dioxanne 1,3 par estérification de l'acide obtenu à l'issue de la 4ème étape par l'isomère trans du produit obtenu à l'issue de la 1ère étape,
- 6ème étape : polymérisation du monomère obtenu à l'issue de la 5è étape.

L'invention a encore pour objet l'utilisation de ces polymères dans le domaine de l'optique non linéaire.

La description qui va suivre portera sur le procédé général de synthèse des polymères selon l'invention ainsi que sur leurs caractérisations physiques.

<u>Procédé général de synthèse.</u>

Les polymères selon l'invention sont obtenus par polymérisation radicalaire des monomères correspondants.

Les monomères sont obtenus en cinq étapes à partir des produits commerciaux suivants :

* l'acide ω-bromoalcanoïque,
* l'acide hydroxy-4 benzoïque,
* l'acide acrylique,
* le glycérol,
* le cyano-4 benzaldéhyde.

<u>REACTION 1</u>: Synthèse du (cyano-4 phényl)-2 hydroxy-5 dioxanne 1,3.

Ce composé est synthétisé par action du glycérol sur le cyano-4 benzaldéhyde en présence d'une résine sulfonique du type de la marque déposée Amberlyst 15, de tamis moléculaire 4 angströms dans le tétrahydrofuranne (THF) selon la méthode d'acétalisation décrite par J-C. MESLARD, F. SUBIRA, J-P. VAIRON, A. GUY et R. GARREAU dans le BULLETIN DE LA SOCIETE CHIMIQUE FRANCAISE, 1985 (1), p. 84.

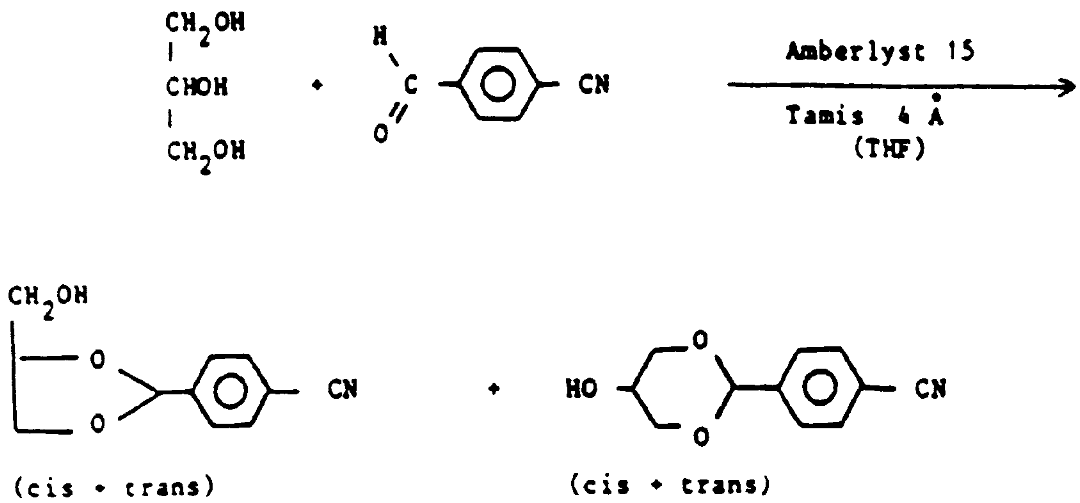


Le (cyano-4 phényl)-2 hydroxy-5 dioxanne 1,3 (isomère trans)est obtenu par chromatographie sur colonne de silice (Kieselgel 60). L'éluant est un mélange comprenant, en volume, 80 % d'acétate d'éthyle et 20 % de

chlorure de méthylène. Le rendement en dérivé trans est de 36 %. La pureté de ce composé (absence d'isomère cis) a été confirmée par résonance magnétique nucléaire (sur protons). Le point de fusion du dérivé trans obtenu est de 131°C.

REACTION 2: Obtention de l' ω-bromoalcanol.

Cet alcool est obtenu par réduction de l'acide ω-bromoalcanoïque correspondant au moyen de l'hydrure de lithium et d'aluminium dans l'éther.

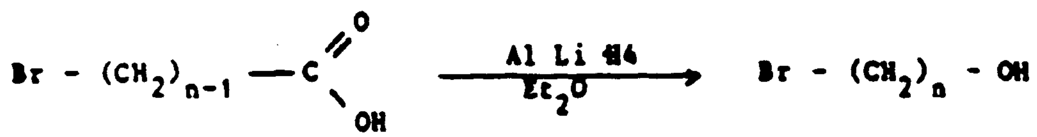


Dans le cas où n = 6, le point d'ébullition du liquide obtenu est de 101°C, sous une pression de 4 mm de mercure, et le rendement de la réaction est de 70 %.

Les alcools correspondant à n = 2, 3 et 11 sont disponibles dans le commerce.

REACTION 3: synthèse de l'acide ω-hydroxy-alkyloxy-4 benzoïque.

Cet acide résulte de l'action de l' ω-bromoalcanol obtenu à l'issue de la réaction 2 sur l'acide hydroxy-4 benzoïque en milieu potasse hydroalcoolique.

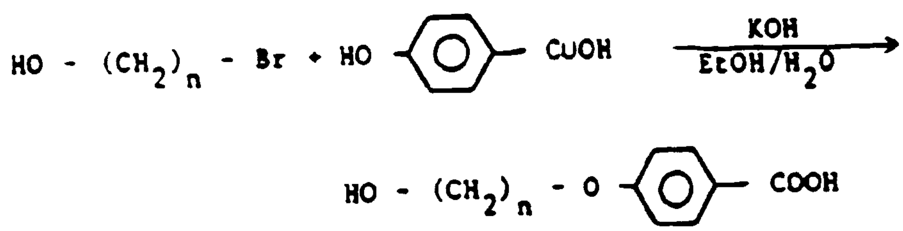


Pour n = 2, le rendement de la réaction est de 39 % et le point de fusion du produit obtenu est de 172°C.

Pour n = 6, le rendement de la réaction est de 66,5 % et le comportement thermique est le suivant :

K 137,2°C (N) 114,2°C L

K désignant la phase cristalline, (N) une phase nématique monotrope et L la phase liquide.

REACTION 4 : Obtention de l'acide (acryloyloxyalkyloxy)-4 benzoïque.

L'estérification de l'acide ω-hydroxyalkyloxy-4 benzoïque obtenu à l'issue de la réaction 3, au moyen de l'acide acrylique conduit à l'acide (acryloyloxyalkyloxy)-4 benzoïque. Cette estérification se fait en utilisant le benzène comme solvant et l'acide paratoluène sulfonique (APTS) comme catalyseur. Au cours de la réaction, l'hydroquinone est utilisée comme inhibiteur de polymérisation.

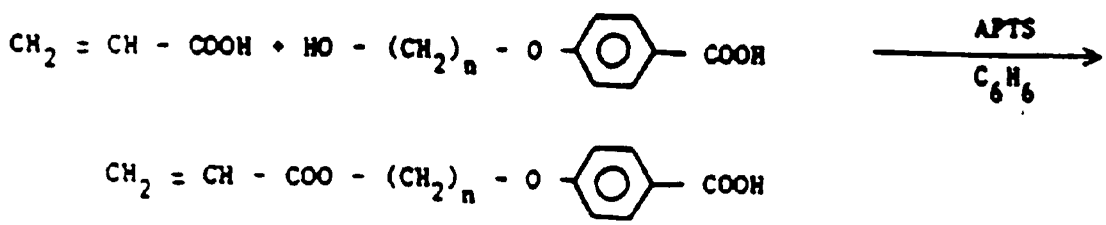


Pour n = 2, le rendement de la réaction est de 18 % . Le point de fusion du produit obtenu est de 113,5 °C.

Pour n = 6, le rendement de la réaction est de 85 % et le diagramme des phases est le suivant :

K 83°C $S_C$ 102°C N 112°C L

$S_C$ désignant une phase smectique C et N une phase nématique.

REACTION 5: synthèse du (cyano-4 phényl)-2 [(acryloyloxyalkyloxy)-4 (benzoyloxy)] 5 dioxanne 1,3.

Les monomères sont obtenus par estérification des acides (acryloyloxyalkyloxy)-4 benzoïque obtenus à l'issue de la réaction 4 par le (cyano-4 phényl)-2 hydroxy-5 dioxanne 1,3 (isomère trans) obtenu à l'issue de la réaction 1. Cette réaction s'effectue dans le chlorure de méthylène à l'aide de dicyclohexyl carbodiimide (DCCI) comme agent d'estérification en présence de diméthyl amino-4 pyridine (DMAP) comme catalyseur.

Les monomères sont purifiés par chromatographie sur colonne de silice (Kieselgel 60). L'éluant est un mélange comportant, en volume, 10 % de chlorure de méthylène, 30 % d'acétate d'éthyle et 60 % de cyclohexane.

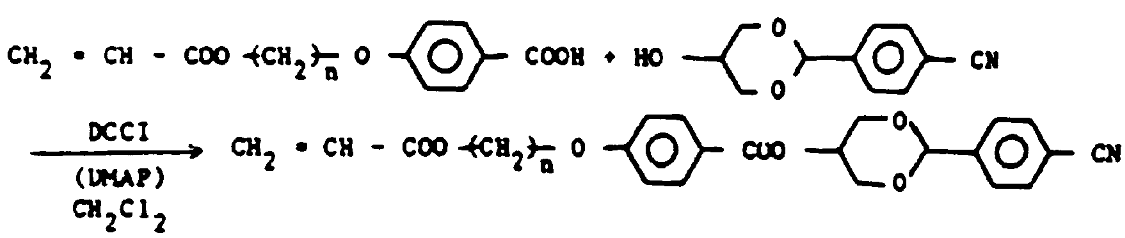


Pour n = 2, le rendement de la réaction est de 60 % et le point de fusion du monomère est de 158°C.

Pour n = 6, le rendement de la réaction est de 53 %. Il est de 40 % pour n = 11.

REACTION 6: polymérisation des monomères.

Les polymérisations ont été effectuées sous vide en utilisant 1'α, α' azobisisobutyronitrile (AIBN) comme amorceur radicalaire et le diméthylformamide comme solvant à 65°C pendant deux jours. Le rapport monomère / amorceur vaut 200.

A titre d'exemple, lorsque n = 6, le rendement en polymère est de 71 %. La masse moléculaire moyenne en nombre est de 7000, la masse moléculaire moyenne en poids est de 13500. Les masses moléculaires ont été déterminées par chromatographie par perméation de gel (GPC) et correspondent à des équivalents polystyrène.

Propriétés physiques des polymères.

Les propriétés mésomorphes des polymères préparés ont été étudiées par analyse enthalpique différentielle, microscopie optique et diffraction des rayons X.

Pour n = 2, le diagramme des phases est le suivant :

G 82°C N 205°C L

G, N et L désignant respectivement les phases vitreuse, nématique et liquide.

Pour n = 6, le diagramme des phases est le suivant :

G 45°C $N_{re}$ 90°C S 207°C N 208°C L

$N_{re}$ et S désignant respectivement des phases nématique réentrante et smectique.

Les polymères selon l'invention qui possèdent une phase nématique (n = 2 ou 6 par exemple) et qui ont une température de transition vitreuse supérieure à la température ambiante ont une application possible en optique non linéaire et plus particulièrement dans les effets du second ordre comme la génération de seconde harmonique. Ces polymères peuvent en effet être utilisés comme matrice d'orientation pour des petites molécules ayant une forte hyperpolarisabilité du second ordre et conduire à des systèmes non centrosymétriques après orientation sous champ électrique continu.

## Revendications

1. Polymère mésomorphe à chaînes latérales, le polymère étant du type polyacrylate et les chaînes latérales comportant le motif 1,3 dioxanne, caractérisé en ce qu'il répond à la formule suivante :

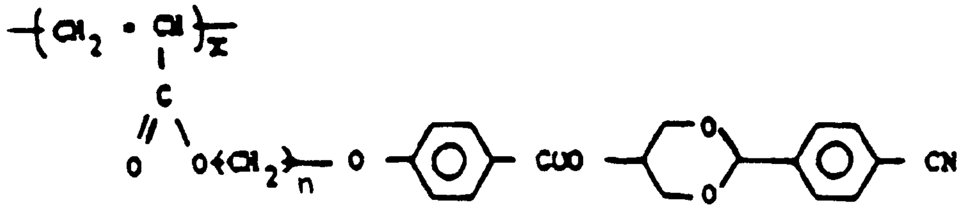

x indiquant le degré de polymérisation

et 2 $\leqq$ n $\leqq$ 15.

2. Procédé de fabrication du polymère mésomorphe selon la revendication 1, caractérisé en ce qu'il comprend les étapes suivantes :

– 1ère étape : synthèse du (cyano-4 phényl)-2 hydroxy-5 dioxanne 1,3 par action du glycérol sur le cyano-4 benzaldéhyde,

– 2ème étape : obtention de l' ω-bromoalcanol par réduction de l'acide ω-bromoalcanoïque correspondant,

– 3ème étape : synthèse de l'acide ω-hydroxyalkyloxy-4 benzoïque par action de l' ω-bromoalcanol obtenu à l'issue de la 2ème étape sur l'acide hydroxy-4 benzoïque,

– 4ème étape : obtention de l'acide (acryloyloxyalkyloxy)-4 benzoïque par estérification de l'acide obtenu à l'issue de la 3ème étape au moyen de l'acide acrylique,

– 5ème étape : synthèse du monomère (cyano-4 phényl)-2 [(acryloyloxyalkyloxy)-4 (benzoyloxy)] 5 dioxanne 1,3 par estérification de l'acide obtenu à l'issue de la 4ème étape par l'isomère trans du produit obtenu à l'issue de la 1ère étape,

– 6ème étape : polymérisation du monomère obtenu à l'issue de la 5è étape.

## Claims

1. A mesomorphic polymer with side chains, the said polymer being of the polyacrylate type and the side chains comprising a 1,3 dioxane group, characterized in that it complies with the following formula:

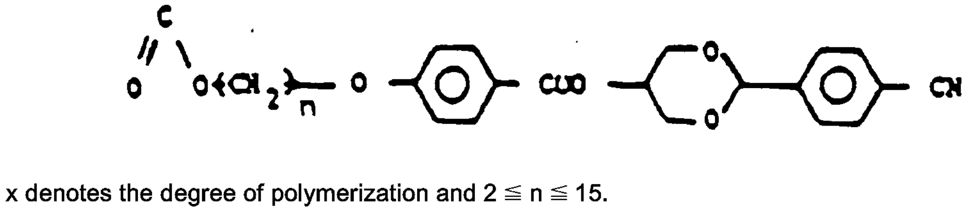

wherein x denotes the degree of polymerization and 2 $\leqq$ n $\leqq$ 15.

2. A method for the production of the mesomorphic polymer as claimed in claim 1, characterized in that it comprises the following stages:

– as the first stage: synthesis of 2-(4-cyanophenyl)-5-hydroxy-1,3-dioxane by the action of glycerol on 4-cyano-benzaldehyde,

– as the second stage: obtaining ω-bromoalkanol by the reduction of the corresponding ω-bromoalkanoic acid,

– as the third stage: synthesis of ω-hydroxy-4-alkyloxy-benzoic acid by the action of the ω-bromoalkanol obtained at the end of the second stage on 4-hydroxy-benzoic acid,

– as the fourth stage: obtaining 4-(acryloyloxyalkyloxy)-benzoic acid by the esterification of the acid obtained at the end of the third stage by means of acrylic acid,

– as the fifth stage: synthesis of the monomer 2-(4-cyano-phenyl)-5-[4-(acryloyloxyalkyloxy)-benzoyloxy]-1,3-dioxane by the esterification of the acid obtained at the end of the fourth stage with the trans isomer of the product obtained at the end of the first stage,

– as the sixth stage: polymerization of the monomer obtained at the end of the fifth stage.

## Patentansprüche

1. Mesomorphes Polymer mit Seitenketten, wobei das Polymer vom Polyacrylat-Typ ist und die Seitenketten die 1,3-Dioxan-Gruppe tragen, dadurch gekennzeichnet, daß es der folgenden Formel entspricht:

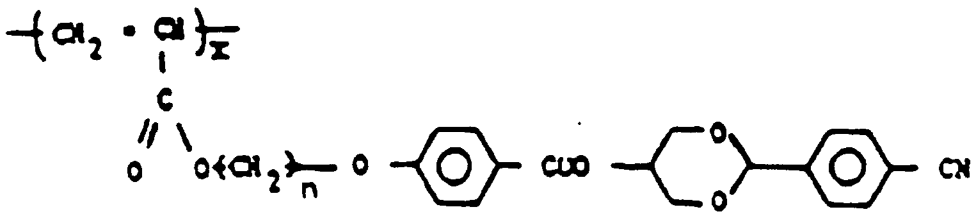

worin x den Polymerisationsgrad angibt und $2 \leqq n \leqq 15$ ist.

2. Verfahren zur Herstellung des mesomorphen Polymers gemäß Anspruch 1, dadurch gekennzeichnet, daß es die folgenden Stufen umfaßt:

– erste Stufe: Synthese von 2-(4-Cyanophenyl)-5-hydroxy-1,3-dioxan durch Umsetzen von Glycerin mit 4-Cyanobenz-aldehyd,

– zweite Stufe: Bildung des ω-Bromalkanols durch Reduktion der entsprechenden ω-Bromalkansäure,

– dritte Stufe: Synthese der ω-Hydroxy-4-alkyloxy-benzoesäure durch Umsetzung des am Ende der zweiten Stufe erhaltenen ω-Bromalkanols mit 4-Hydroxybenzoesäure,

– vierte Stufe: Bildung der 4-(Acryloyloxyalkyloxy)-benzoesäure durch Veresterung der am Ende der dritten Stufe erhaltenen Säure mit Acrylsäure,

– fünfte Stufe: Synthese des Monomers 2-(4-Cyanophenyl)-5-[4-(acryloyloxyalkyloxy)-benzoyloxy]-1,3-dioxan durch Veresterung der am Ende der vierten Stufe erhaltenen Säure mit dem trans-Isomeren der am Ende der ersten Stufe erhaltenen Verbindung,

– sechste Stufe: Polymerisation des am Ende der fünften Stufe erhaltenen Monomers.